# EUROPÄISCHE PATENTSCHRIFT

(11) **EP 1 625 006 B1**
(45) Veröffentlichungstag und Bekanntmachung des Hinweises auf die Patenterteilung: **07.03.2007**
(21) Anmeldenummer: 04731178.2
(22) Anmeldetag: 04.05.2004
(51) Int. Cl.: B29C 47/20, B29C 47/70, B29C 47/06, B29D 24/00

(54) **VERFAHREN ZUR HERSTELLUNG EINER MEHRSCHICHTIGEN STEGPLATTE OHNE TRIANGELEFFEKT DURCH COEXTRUSION**
PROCESS FOR MANUFACTURING A MULTILAYERED PLATE WITHOUT ANY TRIANGLE EFFECT COATED BY COEXTRUSION
PROCÉDÉ DE FABRICATION D'UNE PLAQUE MULTICOUCHE SANS EFFET DIT DE TRIANGLE PAR COEXTRUSION

(30) Priorität: 16.05.2003 DE 10322003
(43) Veröffentlichungstag der Anmeldung: 15.02.2006
(60) Teilanmeldung: 06027045.1
(73) Patentinhaber: Bayer Sheet Europe GmbH, 64293 Darmstadt (DE)
(72) Erfinder: RÜBECK, Jakob, 61130 Nidderau (DE)
(74) Vertreter: Lütjens, Henning
(86) Internationale Anmeldenummer: PCT/EP2004/004704
(87) Internationale Veröffentlichungsnummer: WO 2004/101257

(56) Entgegenhaltungen:
- EP-A- 0 774 551
- EP-A- 1 228 977
- DE-U- 29 823 984
- US-A- 3 606 636
- US-A- 3 764 245
- PATENT ABSTRACTS OF JAPAN Bd. 007, Nr. 063 (M-200), 16. März 1983 (1983-03-16) & JP 57 207032 A (HASHIMOTO FORMING KOGYO KK), 18. Dezember 1982 (1982-12-18)

## Beschreibung

Die vorliegende Erfindung betrifft ein Verfahren zur Herstellung von zwickelfreien, durch Coextrusion beschichteten Stegplatten, sowie mehrschichtige coextrudierte Stegplatten, umfassend mindestens eine Schicht enthaltend einen Thermoplasten und mindestens eine Beschichtung, ohne Triangeleffekt, sowie andere Erzeugnisse welche diese mehrschichtige Stegplatte enthalten.

Stegplatten werden häufig ein- oder beidseitig mit jeweils einer Coextrusionsschicht auf einer oder beiden Außenseiten versehen, welche verschiedene Funktionalitäten erfüllen kann, bspw. kann es sich um eine UV-Schutzschicht handeln, welche die Platte vor der Schädigung (z.B. Vergilbung) durch UV-Strahlung schützt, aber auch andere Funktionalitäten wie z.B. IR-Reflexion werden auf diese Weise erfüllt.

Im folgenden wird der Stand der Technik zu mehrschichtigen Erzeugnissen zusammengefasst.

EP-A 0 110 221 offenbart Platten aus zwei Schichten Polycarbonat, wobei eine Schicht wenigstens 3 Gew.-% eines UV-Absorbers enthält. Die Herstellung dieser Platten kann gemäß EP-A 0 110 221 durch Coextrusion erfolgen.

EP-A 0 320 632 offenbart Formkörper aus zwei Schichten aus thermoplastischem Kunststoff, bevorzugt Polycarbonat, wobei eine Schicht spezielle substituierte Benzotriazole als UV-Absorber enthält. EP-A 0 320 632 offenbart auch die Herstellung dieser Formkörper durch Coextrusion.

EP-A 0 247 480 offenbart mehrschichtige Platten, in denen neben einer Schicht aus thermoplastischem Kunststoff eine Schicht aus verzweigtem Polycarbonat vorhanden ist, wobei die Schicht aus Polycarbonat spezielle substituierte Benzotriazole als UV-Absorber enthält. Die Herstellung dieser Platten durch Coextrusion wird ebenfalls offenbart.

EP-A 0 500 496 offenbart Polymerzusammensetzungen, die mit speziellen Triazinen gegen UV-Licht stabilisiert sind und deren Verwendung als Außenschicht in Mehrschichtsystemen. Als Polymere werden Polycarbonat, Polyester, Polyamide, Polyacetale, Polyphenylenoxid und Polyphenylensulfid genannt.

Alle aus dem o.g. Stand der Technik bekannten beschichteten Stegplatten zeigen jedoch das Problem des sogenannten "Triangeleffekts", d.h., bei der Coextrusion entstehen Zwickel, bestehend aus dem Material der Coextrusionsschicht, verbunden mit einer gewissen Unebenheit der Plattenoberfläche.

US-A-3 764 245 offenbart eine Vorrichtung aus zwei Extrudern, von denen einer den Ober- und Untergurt der Stegplatte ausbildet, und der andere die Stege. Es wird die Möglichkeit erwähnt, beide Extruder mit dem gleichen Material zu betreiben.

EP-A-1 228 977 offenbart die innere Strukturierung von Stegen zwischen der unteren und oberen Deckplatte mit Hilfe eines beweglichen Umlegemechanismus, jedoch keine Coextrusion.

EP-A-0 774 551 offenbart die Herstellung von mehrschichtigen Stegplatten durch Coextrusion, nicht aber, dass von dem Materialfluß, der die Basisschicht ausbildet, ein Teilfluß abgezweigt wird, der direkt in die Stegform geführt wird und die Stege ausbildet.

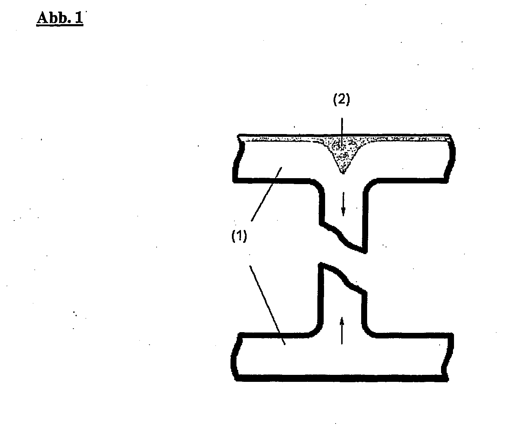

Die Abb. 1 zeigt schematisch anhand eines Schnittes durch eine Stegplatte wie es zu dieser Zwickelbildung kommt. Die Pfeile zeigen den Fluss der Polymerschmelze in der Stegform der Stegplatte (1) der in der Coexschicht (2) die Ausbildung der Zwickel hervorruft.

Ausgehend vom Stand der Technik ergibt sich daher die. Aufgabe, eine gegebenenfalls mit mehreren Schichten durch Coestrusion beschichtete Stegplatte bereitzustellen, die gegenüber dem Stand der Technik keinen Triangeleffekt mehr zeigt.

Diese Aufgabe liegt der vorliegenden Erfindung zu Grunde.

Im Falle einseitig beschichteter Platten könnte man dieses Problem mittels einer geänderten Zuführung des Coextrusionsmaterials lösen, indem man die Materialzufuhr von der unbeschichteten Seite verstärkt, wodurch die Zwickelbildung an der beschichteten Seite vermieden werden kann.

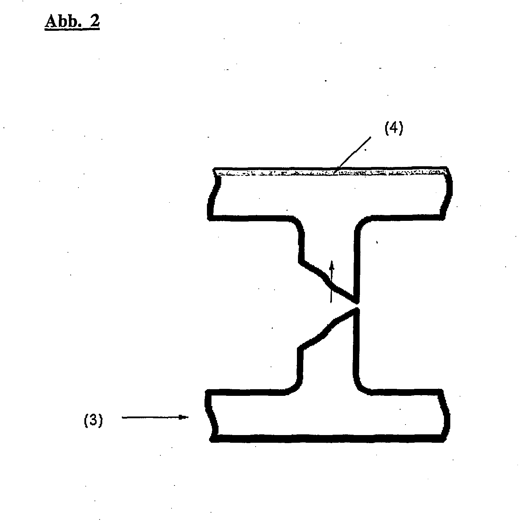

Die Abb.2 zeigt schematisch anhand eines Schnittes durch eine Stegplatte wie dieses Verfahren funktionieren könnte:

Durch einen verstärkten Polymerfluss von der nicht beschichteten Seite her kommt es zu einer Verteilung der Schmelze in Richtung der beschichteten Seite der Stegplatte (3), so dass die Coexschicht (4) zwickelfrei bleibt.

Im Falle beidseitig beschichteter Platten würde dieses Verfahren jedoch nicht mehr funktionieren. Hier würde beispielsweise durch die verstärkte Zufuhr von der Unterseite her auf der Unterseite ein verstärkter Zwickel auftreten, der Gewinn auf der einen Seite würde also durch einen Verlust auf der anderen Seite wieder aufgehoben.

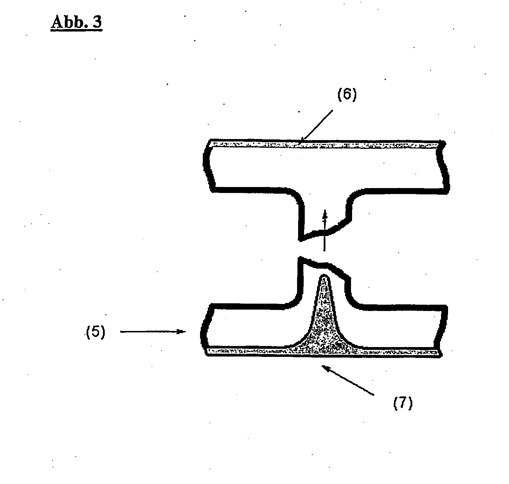

Die Abb. 3 zeigt schematisch anhand eines Schnittes durch eine Stegplatte wie diese Auswirkung aussähe (Zufuhr bei (5)): Während die obere Coexschicht (6) zwickelfrei bleibt, weist die untere Coexschicht (7) einen starken Zwickel auf.

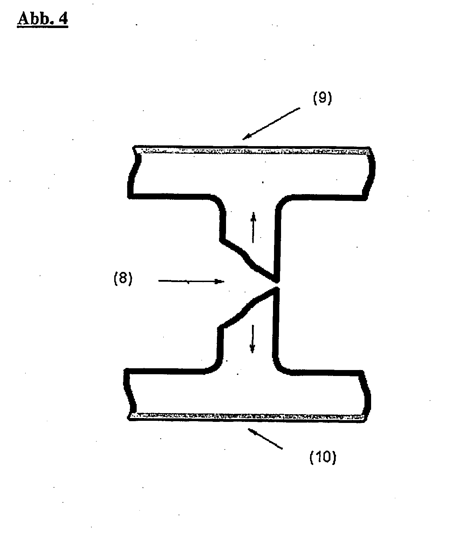

Es wurde nun überraschenderweise gefunden, dass man die Zwickelbildung bzw. den Triangeleffekt auf jeder Seite praktisch vollständig vermeiden kann, indem man die Materialflüsse während der Extrusion so modifiziert, dass man vom üblichen Materialfluss, um den Kamm der Düse herum, einen Teilfluss abzweigt, der direkt in die Mitte der Stegform der Düse geführt wird, welcher die Stege der Platten ausbildet. Gewöhnlich wird der Materialfluss durch den Kamm in eine obere und eine untere Strömung aufgeteilt, welche an den Stegformen von oben und unten zusammenfließen und' so die Stege erzeugen. Dieses. Abfließen von Material aus der oberen und unteren Strömung führt jedoch zu einem typischen "Abflusstrichter" welcher auf der Coextrusionsseite durch nachfließendes Coexmaterial gefüllt wird. Es entsteht ein Zwickel, s. Abb. 1. Dadurch, dass erfindungsgemäß ein Teil des Materials direkt in die Stegformen geleitet wird, wird der Materialabfluss aus der oberen und unteren Strömung verringert oder sogar verhindert, s. Abb. 4, die Trichter- und damit die Zwickelbildung, der Triangeleffekt auf beiden Seiten der Platte wird minimiert, vorzugsweise sogar vollständig vermieden. Das erfindungsgemäße Verfahren ist daher zur Herstellung sowohl ein- als auch beidseitig beschichteter Stegplatten geeignet.

Die Abb. 4 zeigt schematisch anhand eines Schnittes durch eine Stegplatte wie das erfindungsgemäße Verfahren funktioniert :

Durch eine zusätzliche Zuführung von Polymerschmelze bei (8), beispielsweise durch eine Bohrung in die Stegform bleiben beide Coextrusionsschichten (9) und (10) zwickelfrei.

Es ist vollkommen überraschend, dass durch eine so einfache Maßnahme ein derart lange vorhandenes Problem so erfolgreich gelöst werden konnte.

Gegenstand der vorliegenden Erfindung ist somit ein spezielles Verfahren zur Herstellung von Beschichtungen auf Stegplatten durch Coextrusion, sowie die durch dieses Verfahren erhältlichen zwickel-, bzw. triangeleffektfreien Platten. Diese Platten zeichnen sich durch eine besonders glatte Oberfläche und gleichmäßige, also zwickelfreie, Coextrusionsschichten aus. Eine bevorzugte Ausfuhrungsform ist eine beidseitig beschichtete Stegplatte.

Ebenfalls Gegenstand dieser Anmeldung ist daher auch eine spezielle Extrusionsdüse, welche die Durchführung des erfindungsgemäßen Verfahrens ermöglicht.

Der Kamm der Düse enthält zusätzlich zu den üblichen und für verschieden Zwecke benötigten Bohrungen, Schnitten und Formen Bohrungen, welche einen Teil des zufließenden Materials direkt in die Stegform führt, In einer bevorzugten Ausführungsform wird das Material dabei aus einem hinteren Bereich der Düse direkt nach vorne in die Stegform geführt.

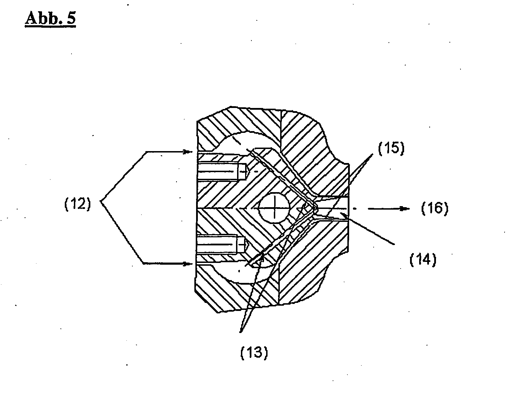

Eine mögliche Ausführungsform der Düse auf Höhe einer Stegform Abb. 5 schematisch als Querschnitt dargestellt:

Der Zufluss der Polymerschmelze erfolgt bei (12). Durch die Bohrungen (13) erfolgt die Schmelzezuführung in die Stegform (14), (15) bezeichnet die Ober- bzw. Unterseitenform, der Plattenaustritt erfolgt bei (16).

Weiterhin ist Gegenstand der vorliegenden Erfindung ein Erzeugnis, das die genannten Platten enthält. Dabei ist dieses Erzeugnis, welches bspw. die genannte mehrschichtige Stegplatte enthält, bevorzugt ausgewählt aus der Gruppe bestehend aus Verscheibungen, Gewächshaus, Wintergarten, Veranda, Carport, Bushaltestelle, Überdachung, Trennwand, Kassenhaus und Solarkollektor.

Der wesentliche Vorteil des erfindungsgemäßen Verfahrens liegt in der Vermeidung des Triangeleffektes, welcher sich ansonsten durch die Zwickelbildung und die damit verbundene Materialvergeudung sowie eine unebene Oberfläche der Platte negativ bemerkbar macht. Das im Zwickel vergeudete Beschichtungsmaterial besteht in der Regel aus wertvollem, mit kostspieligen Additiven versehenem Thermoplasten. Die Einsparung solchen Materials kann zu nicht unerheblichen Kostenvorteilen führen.

Das erfindungsgemäße Verfahren ist zur Herstellung verschiedenster Coextrusionsschichten, prinzipiell aller denkbaren Funktionsschichten auch in Kombination (UV-Schutz und Funktionsschicht, z.B. IR-Reflexion, oben sowie UV-Schutz, unten) geeignet, besonders geeignet ist es zur Herstellung beidseitig mit UV-Schutz versehener Stegplatten.

Die erfindungsgemäßen, mehrschichtigen Erzeugnisse wie Stegplatten haben weitere Vorteile gegenüber dem Stand der Technik. Die erfindungsgemäßen mehrschichtigen Erzeugnisse wie die Stegplatte sind durch Coextrusion herstellbar. Damit ergeben sich Vorteile gegenüber eines durch Lackierung hergestellten Erzeugnisses. So verdampfen bei der Coextrusion keine Lösungsmittel, wie dies bei Lackierungen der Fall ist.

Außerdem können Lacke nicht lange lagern. Diesen Nachteil hat die Coextrusion nicht.

Außerdem erfordern Lacke eine aufwendige Technik. Zum Beispiel erfordern sie explosionsgeschützte Aggregate, das Recycling von Lösungsmitteln und damit teure Investitionen in Anlagen. Diesen Nachteil hat die Coextrusion nicht.

Eine bevorzugte Ausführungsform der vorliegenden Erfindung ist die genannte mehrschichtige Stegplatte, wobei die Basis- wie auch die Coextrusionsschicht aus unterschiedlichen oder gleichen Thermoplasten gefertigt sein können, bevorzugt basieren beide Schichten auf dem gleichen Material.

Als thermoplastische Formmassen kommen alle Formmassen infrage die bspw. Polycarbonat und/oder Polyester und/oder Polyestercarbonaten und/oder Polyestern und/oder Polymethylmethacrylaten und/oder Polystyrolen und/oder SAN und/oder Blends aus Polycarbonat und Polyestern und/oder Polymethylmethacrylaten und/oder Polystyrolen und/oder SAN enthalten.

Bevorzugt werden Formmassen enthaltend transparente Thermoplaste wie Polycarbonat und/oder Polyester sowie Blends enthaltend mindestens einen der beiden Thermoplasten. Besonders bevorzugt werden Polycarbonat und Polyester, ganz besonders bevorzugt Polycarbonat eingesetzt.

Die Herstellung dieser Thermoplaste ist dem Fachmann wohlbekannt und erfolgt nach den bekannten Verfahren.

Erfindungsgemäß sind diejenigen mehrschichtigen Erzeugnisse bevorzugt, bei denen die Coextrusionsschicht zusätzlich 1 bis 20 Gew.-% UV-Absorber enthält und 5 bis 200 µm bevorzugt 30 bis 100 µm dick ist.

Die Stegplatten können Stegdoppelplatten, Stegdreifachplatten, Stegvierfachplatten usw. sein. Die Stegplatten können auch unterschiedliche Profile wie z.B. X-Profile bzw. XX-Profile besitzen. Außerdem können die Stegplatten auch gewellte Stegplatten sein.

Eine bevorzugte Ausführungsform der vorliegenden Erfindung ist Stegplatte mit beidseitiger Coextrusionsschicht, wobei Basismaterial und die beiden Coextrusionsschichten aus-Polycarbonat bestehen.

Die erfindungsgemäßen mehrschichtigen Erzeugnisse können, abhängig von der Art der verwendeten Thermoplaste und deren Additivierung, transluzent, gedeckt oder transparent sein.

In einer besonderen Ausführungsform sind die mehrschichtigen Erzeugnisse transparent.

Sowohl das Basismaterial als auch die Coextrusionsschicht(en) in den erfindungsgemäßen Stegplatten können Additive enthalten.

Die Coextrusionsschicht kann insbesondere UV-Absorber und Entformungsmittel enthalten.

Die UV-Absorber bzw. deren Mischungen sind dabei in Konzentrationen von 0-20 Gew.-% vorhanden. Bevorzugt sind dabei 0,1 bis 20 Gew.-%, besonders bevorzugt 2 bis 10 Gew.-%, ganz besonders bevorzugt 3 bis 8 Gew.-%. Falls zwei oder mehr Coextrusionsschichten vorhanden sind, kann der Anteil an UV-Absorber in diesen Schichten unterschiedlich sein.

Beispiele für UV-Absorber, die erfindungsgemäß verwendet werden können, werden im folgenden beschrieben.

### a) Benzotriazol-Derivate nach Formel (I):

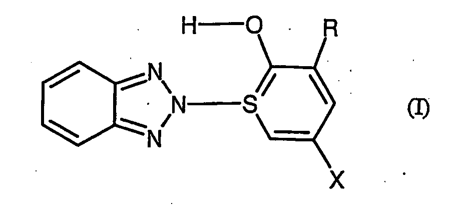

In Formel (I) sind R und X gleich oder verschieden und bedeuten H oder Alkyl oder Alkylaryl.

Bevorzugt ist dabei Tinuvin 329 mit X = 1,1,3,3-Tetramethylbutyl und R = H

Tinuvin 350 mit X = tert-Butyl und R = 2-Butyl

Tinuvin 234 mit X = R = 1,1-Dimethyl-1-phenyl

### b) Dimere Benzotriazol-Derivate nach Formel (II):

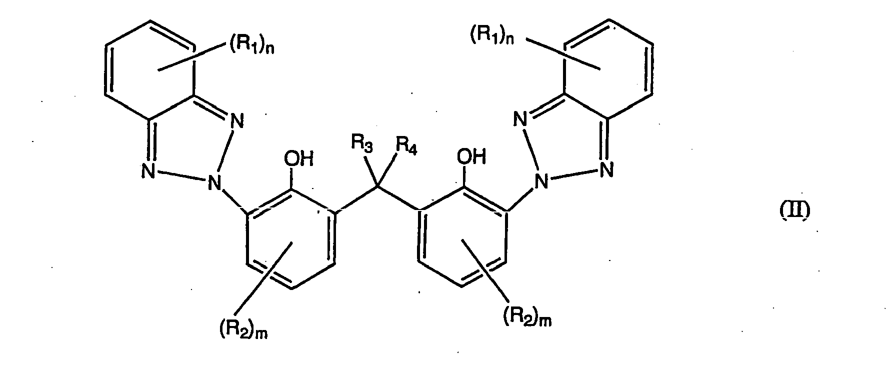

In Formel (II) sind R¹ und R² gleich oder verschieden und bedeuten H, Halogen, C₁-C₁₀-Alkyl, C₅-C₁₀-Cycloalkyl, C₇-C₁₃-Aralkyl, C₆-C₁₄-Aryl, -OR⁵ oder -(CO)-O-R⁵ mit R⁵ = H oder C₁-C₄-Alkyl.

In Formel (II) sind R³ und R⁴ ebenfalls gleich oder verschieden und bedeuten H, C₁-C₄-Alkyl, C₅-C₆-Cycloalkyl, Benzyl oder C₆-C₁₄-Aryl.

In Formel (II) bedeutet m 1, 2 oder 3 und n 1, 2, 3 oder 4.

Bevorzugt ist dabei Tinuvin 360 mit R¹ = R³ = R⁴ = H; n = 4; R² = 1,1,3,3-Tetramethylbutyl; m = 1

### b1) Dimere Benzotriazol-Derivate nach Formel (III):

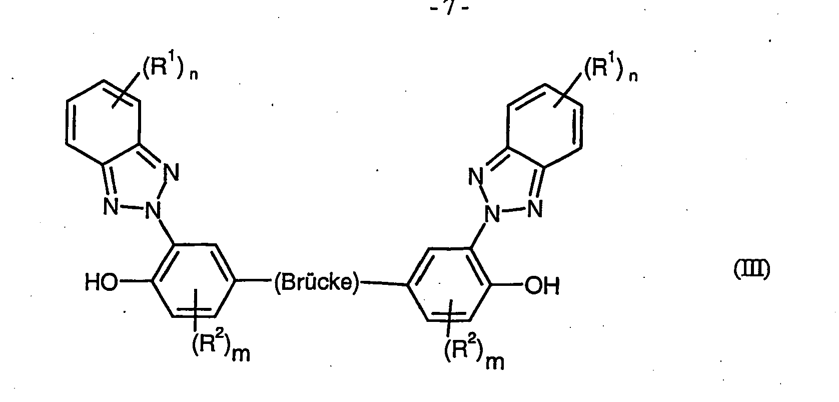

worin die Brücke 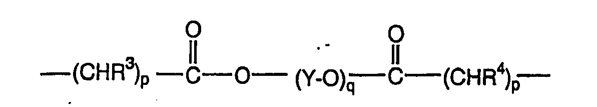
bedeutet, R¹, R², m und n die für Formel (II) genannte Bedeutung haben, und worin p eine ganze Zahl von 0 bis 3 ist, q eine ganze Zahl von 1 bis 10 ist,
Y gleich -CH₂-CH₂-, -(CH₂)₃-, -(CH₂)₄-, -(CH₂)₅-, -(CH₂)₆-, oder CH(CH₃)-CH₂-
ist und R³ und R⁴ die für Formel (II) genannte Bedeutung haben.

Bevorzugt ist dabei Tinuvin 840 mit R¹ = H; n = 4; R² = tert-Butyl; m = 1; R² ist in ortho-Stellung zur OH-Gruppe angebracht; R³ = R⁴ = H; p = 2; Y = -(CH₂)₅-; q =1

### c) Triazin-Derivate nach Formel (IV):

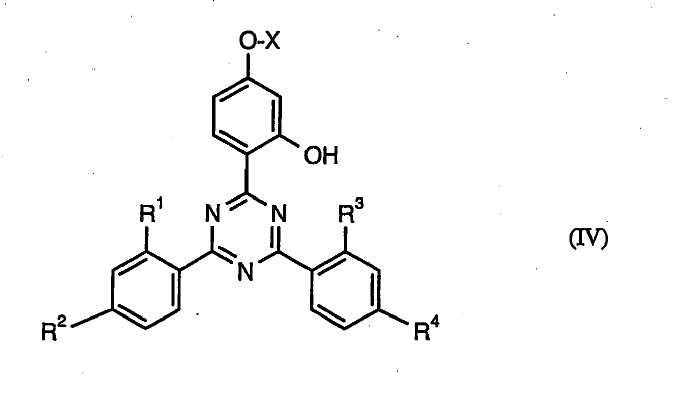

worin R¹, R², R³, R⁴ in Formel (IV) gleich oder verschieden sind und H oder Alkyl oder CN oder Halogen sind und X gleich Alkyl ist.

Bevorzugt ist dabei Tinuvin 1577 mit R¹ = R² = R³ = R⁴ = H; X= Hexyl

Cyasorb UV-1164 mit R¹ = R² = R³ = R⁴ = Methyl; X = Octyl

### d) Triazin-Derivate der folgenden Formel (IVa)

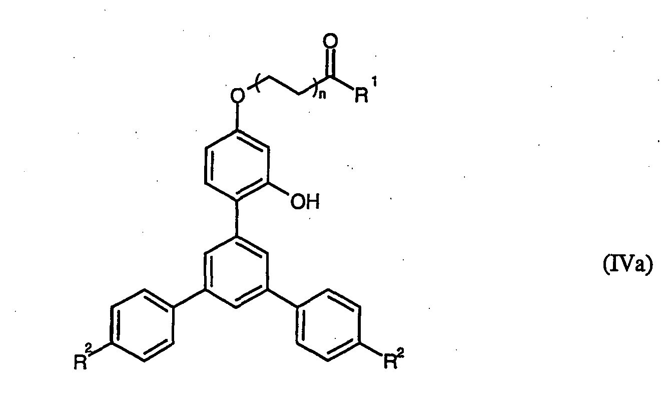

worin
R¹ gleich C₁-Alkyl bis C₁₇-Alkyl bedeutet,
R² gleich H oder C₁-Alkyl bis C₄-Alkyl bedeutet und
n gleich 0 bis 20 ist.

### e) Dimere Triazin-Derivate der Formel (V):

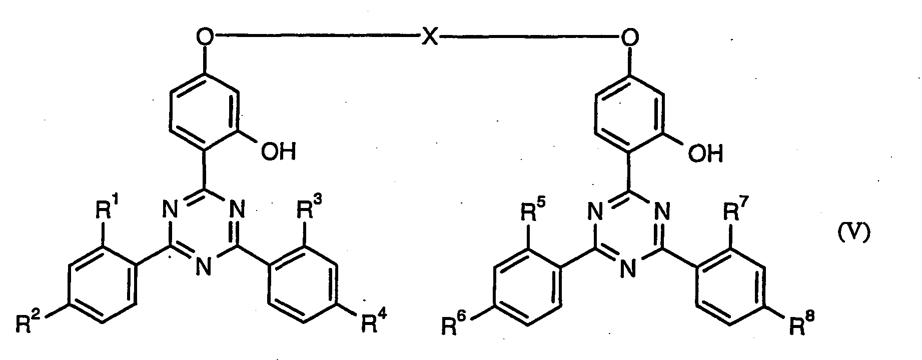

worin
R¹, R², R³, R⁴, R⁵, R⁶, R⁷, R⁸ in Formel (V) gleich oder verschieden sein können und H oder Alkyl oder CN oder Halogen bedeuten und X gleich Alkyl oder-(CH₂CH₂-O-)n-C(=O)-ist.

### f) Diarylcyanoacrylate der Formel (VI)

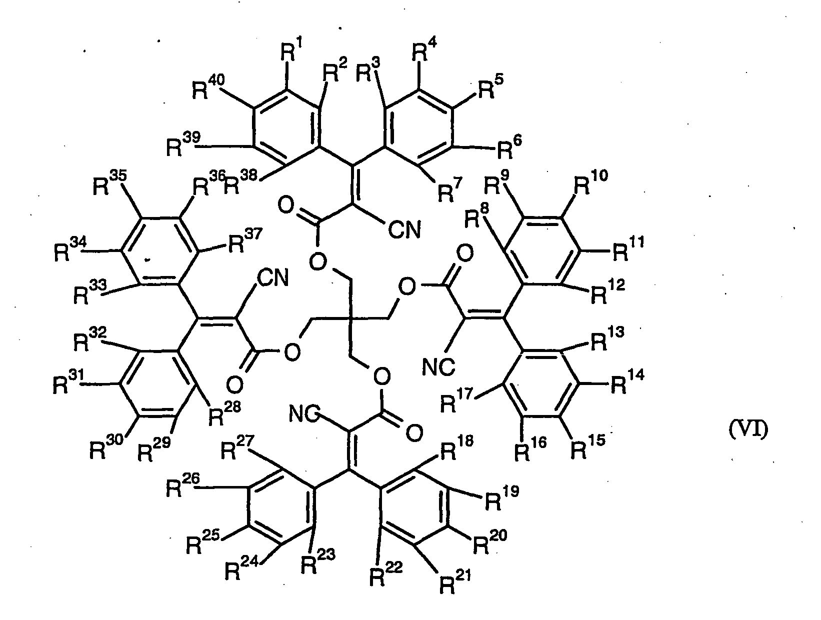

worin
R¹ bis R⁴⁰ gleich oder verschieden sein können und H; Alkyl, CN oder Halogen bedeuten. Bevorzugt ist dabei Uvinul 3030 mit R1 bis R40 = H

Ganz besonders bevorzugt sind die UV-Absorber ausgewählt aus der Gruppe bestehend aus Tinuvin 360, Tinuvin 1577 und Uvinul 3030.

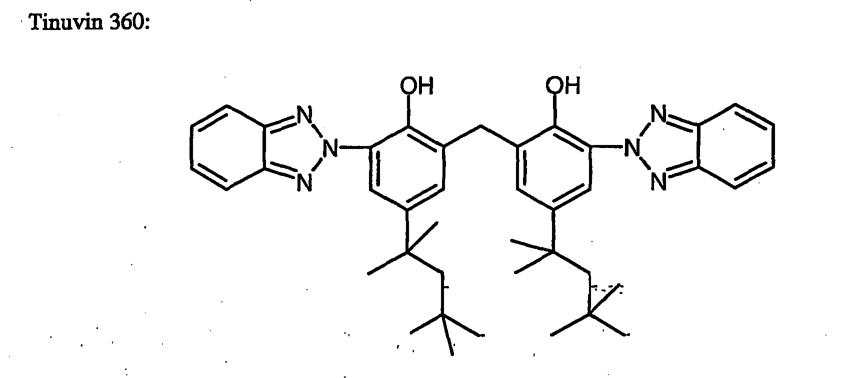

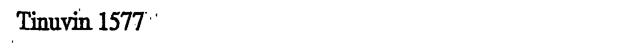

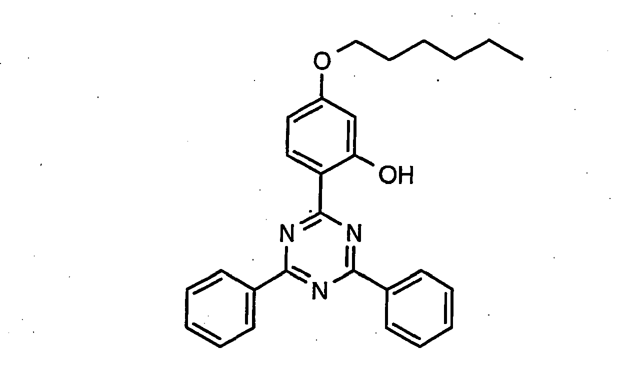

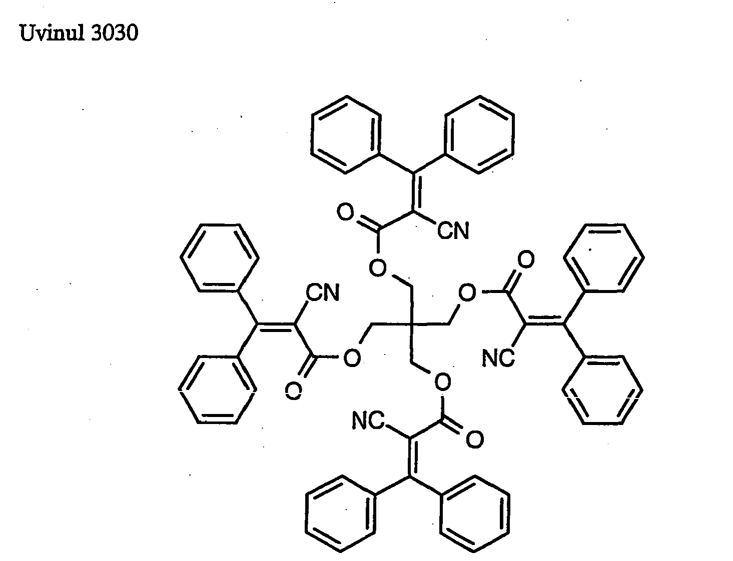

Die genannten UV-Absorber sind kommerziell erhältlich.

Zusätzlich, aber auch anstelle der UV-Absorber, können die Schichten noch andere übliche Verarbeitungshilfsmittel, insbesondere Entformungsmittel und Fließmittel sowie die in den verwendeten Polycarbonaten üblichen Additive wie Stabilisatoren insbesondere Thermostabilisatoren sowie Farbmitteln und optische Aufheller und anorganische Pigmente enthalten.

Als bevorzugte Thermoplaste für die erfindungsgemäßen mehrschichtigen Erzeugnisse sind alle bekannten Polycarbonate geeignet:

Dies sind Homopolycarbonate, Copolycarbonate und thermoplastische Polyestercarbonate

Sie haben bevorzugt mittlere Molekulargewichte M̅_{w} von 18.000 bis 40.000, vorzugsweise von 26.000 bis 36.000 und insbesondere von 28.000 bis 35.000, ermittelt durch Gelpermeationschromatographie, geeicht an Polycarbonat.

Zur Herstellung von Polycarbonaten sei beispielhaft auf "Schnell, Chemistry and Physics of Polycarbonats, Polymer Reviews, Vol. 9, Interscience Publishers, New York, London, Sydney 1964", und auf "D.C. PREVORSEK, B.T. DEBONA and Y. KESTEN, Corporate Research Center, Allied Chemical Corporation, Morristown, New Jersey 07960, 'Synthesis of Poly-(ester)carbonate Copolymers' in Journal of Polymer Science, Polymer Chemistry Edition, Vol. 19, 75-90 (1980)", und auf "D. Freitag, U. Grigo, P.R. Müller, N. Nouvertne, BAYER AG, 'Polycarbonates' in Encyclopedia of Polymer Science and Engineering, Vol. 11, Second Edition, 1988, Seiten 648-718" und schließlich auf "Dres. U. Grigo, K. Kircher und P.R. Müller 'Polycarbonate' in Becker/Braun, Kunststoff-Handbuch, Band 3/1, Polycarbonate, Polyacetale, Polyester, Celluloseester, Carl Hanser Verlag München, Wien 1992, Seiten 117-299" verwiesen.

Die Herstellung der Polycarbonate erfolgt vorzugsweise nach dem Phasengrenzflächenverfahren oder dem Schmelzumesterungsverfahren und wird im Folgenden beispielhaft an dem Phasengrenzflächenverfahren beschrieben.

Als Ausgangsverbindungen bevorzugt einzusetzende Verbindungen sind Bisphenole der allgemeinen Formel

HO-Z-OH,

worin Z ein divalenter, organischer Rest mit 6 bis 30 Kohlenstoffatomen ist, der eine oder mehrere aromatische Gruppen enthält.

Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)-sulfone, Bis(hydroxyphenyl)ketone und 1,3 oder 1,4- Bis(hydroxyphenylpropyl)benzole gehören.

Besonders bevorzugte Bisphenole, die zu den vorgenannten Verbindungsgruppen gehören, sind Bisphenol-A, Tetraalkylbisphenol-A, 1,3 Bis-[2-(4 hydroxyphenyl)-2 propyl]benzol (Bisphenol M), 1,4-Bis-[2-(4-hydroxyphenyl)-2-propyl]benzol, 1,1-Bis-(4-hydroxyphenyl)-3,3,5-trimethylcyclohexan (Bisphenol-TMC) sowie gegebenenfalls deren Gemische.

Bevorzugt werden die erfindungsgemäß einzusetzenden Bisphenolverbindungen mit Kohlensäüreverbindungen, insbesondere Phosgen, oder beim Schmelzeumesterungsprozess mit. Diphenylcarbonat bzw. Dimethylcarbonat, umgesetzt.

Polyestercarbonate werden bevorzugt durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol.%, vorzugsweise von 20 bis 50 Mol.% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden bevorzugt die in DE-A 4238123 genannten Katalysatoren verwendet.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxypbenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyI]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; 1,3,5-Tris-[2-(4-hydroxyphenyl)-2-propyl]benzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere; 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Als Kettenabbrecher werden bevorzugt Phenole wie Phenol, Alkylphenole wie Kresol und 4-tert.-Butylphenol, Chlorphenol, Bromphenol, Cumylphenol oder deren Mischungen in Mengen von 1-20 mol-% bevorzugt 2-10 mol-% je mol Bisphenol verwendet. Bevorzugt sind Phenol, 4-tert-Butylphenol bzw. Cumylphenol.

Kettenabbrecher und Verzweiger können getrennt oder aber auch zusammen mit dem Bisphenol den Synthesen zugesetzt werden.

Die Herstellung der Polycarbonate nach dem Schmelzumesterungsverfahren ist in DE-A 42 38 123 beispielhaft beschrieben.

Erfindungsgemäß bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan und die Copolycarbonate auf Basis der beiden Monomere Bisphenol A und 4,4'-Dihydroxydiphenyl (DOD).

Das Homopolycarbonat auf Basis von Bisphenol A ist besonders bevorzugt.

Das verwendete Polymer kann Stabilisatoren enthalten. Geeignete Stabilisatoren sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosponit und Triarylphosphit genannt. Besonders bevorzugt sind Triphenylphosphin und Tris-(2,4-di-tert.-butylphenyl)phosphit.

Diese Stabilisatoren können in allen Schichten der erfindungsgemäßen Stegplatte vorhanden sein. Also sowohl in der Basis- als auch in der oder in den Coextrusionsschichten. In jeder Schicht können unterschiedliche Additive bzw. Konzentrationen an Additiven vorhanden sein.

Ferner kann die erfindungsgemäße Stegplatte 0.01 bis 0.5 Gew.-% der Ester oder Teilester von ein- bis sechswertigen Alkoholen, insbesondere des Glycerins, des Pentaerythrits oder von Guerbetalkoholen enthalten.

Einwertige Alkohole sind beispielsweise Stearylalkohol, Palmitylalkohol und Guerbetalkohole.

Ein zweiwertiger Alkohol ist beispielsweise Glycol.

Ein dreiwertiger Alkohol ist beispielsweise Glycerin.

Vierwertige Alkohole sind beispielsweise Pentaerythrit und Mesoerythrit.

Fünfwertige Alkohole sind beispielsweise Arabit, Ribit und Xylit.

Sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen C₁₀ bis C₃₆-Monocarbonsäuren und gegebenenfalls Hydroxy-Monocarbonsäuren, vorzugsweise mit gesättigten, aliphatischen C₁₄ bis C₃₂-Monocarbonsäuren und gegebenenfalls Hydroxy-Monocarbonsäuren.

Die kommerziell erhältlichen Fettsäureester, insbesondere des Pentaerythrits und des Glycerins, können herstellungsbedingt <60% unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Bevorzugte gesättigte, aliphatische Monocarbonsäuren mit 14 bis 22 C-Atomen sind beispielsweise Myristinsäure, Palmitinsäure, Stearinsäure, Hydroxystearinsäure, Arachinsäure und Behensäure.

Besonders bevorzugt sind gesättigte, aliphatische Monocarbonsäuren wie Palmitinsäure, Stearinsäure und Hydroxystearinsäure.

Die gesättigten, aliphatischen C₁₀ bis C₃₆-Carbonsäuren und die Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester des Pentaerythrits und des Glycerins mit Stearinsäure und Palmitinsäure.

Besonders bevorzugt sind auch Ester von Guerbetalkoholen und des Glycerins mit Stearinsäure und Palmitinsäure und gegebenenfalls Hydroxystearinsäure.

Diese Ester können sowohl in der Basis als auch in der oder in den Coextrusionsschichten vorhanden sein. In jeder Schicht können unterschiedliche Additive bzw. Konzentrationen vorhanden sein.

Die erfindungsgemäßen Stegplatten können Antistatika enthalten.

Beispiele für Antistatika sind kationaktive, Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali-oder Erdalkalimetallsalzen nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Diese Antistatika können sowohl in der Basis als auch in der oder in den Coextrusionsschichten vorhanden sein. In jeder Schicht können unterschiedliche Additive bzw. Konzentrationen vorhanden sein. Sie werden bevorzugt in der oder in den Coex-Schichten verwendet.

Die erfindungsgemäßen Stegplatten können organische Farbstoffe, anorganische Farbpigmente, Fluoreszenzfarbstoffe und besonders bevorzugt optische Aufheller enthalten.

Diese Farbmittel können sowohl in der Basis als auch in der oder in den Coextrusionsschichten vorhanden sein. In jeder Schicht können unterschiedliche Additive bzw. Konzentrationen vorhanden sein.

Alle für die Herstellung der erfindungsgemäßen Stegplatte verwandten Formmassen, deren Einsatzstoffe und Lösungsmittel können aus ihrer Herstellung und Lagerung mit entsprechenden Verunreinigungen kontaminiert sein, wobei es das Ziel ist, mit so sauberen Ausgangsstoffen wie möglich zu arbeiten.

Das Vermischen der einzelnen Bestandteile kann in bekannter Weise sowohl sukzessive als auch simultan erfolgen und zwar sowohl bei Raumtemperatur als auch bei erhöhter Temperatur.

Die Einarbeitung der Zusätze in die Formmassen für die erfindungsgemäßen Stegplatten insbesondere der UV-Absorber und weiterer vorgenannter Additive erfolgt bevorzugt in bekannter Weise durch Vermischen von Polymergranulat mit den Zusätzen bei Temperaturen von etwa 200 bis 330°C in üblichen, Aggregaten wie Innenknetern, Einschneckenextrudern und Doppelwellenextrudern beispielsweise durch Schmelzecompoundierung oder Schmelzeextrusion oder durch Vermischen der Lösungen des Polymers mit Lösungen der Additive und anschließende Verdampfung der Lösungsmittel in bekannter Weise. Der Anteil der Additive in der Formmasse kann in weiten Grenzen variiert werden und richtet sich nach den gewünschten Eigenschaften der Formmasse. Der Gesamtanteil der Additive in der Formmasse beträgt bevorzugt etwa bis zu 20 Gew.-%, vorzugsweise 0,2 bis 12 Gew.-%, bezogen auf das Gewicht der Formmasse.

Die Einarbeitung der UV-Absorber in die Formmassen kann beispielsweise auch geschehen durch Vermischen von Lösungen der UV-Absorber und gegebenenfalls weiterer vorgenannter Additive mit Lösungen der Kunststoffe in geeigneten organischen Lösungsmitteln wie CH₂Cl₂, Halogenalkanen, Halogenaromaten, Chlorbenzol und Xylolen. Die Substanzgemische werden dann bevorzugt in bekannter Weise via Extrusion homogenisiert; die Lösungsgemische werden, bevorzugt in bekannter Weise durch Ausdampfen des Lösungsmittels und anschließender Extrusion entfernt, beispielsweise compoundiert.

Die Bearbeitung der erfindungsgemäßen Stegplatten z.B. durch Tiefziehen oder durch Oberflächenbearbeitungen, wie z.B. Ausrüstung mit Kratzfestlacken, wasserspreitenden Schichten und ähnliches sind möglich.

Die Coextrusion als solche ist literaturbekannt (siehe beispielsweise EP-A 0 110 221 und EP-A 0 110 238). Im vorliegenden Fall wird vorzugsweise wie folgt verfahren: An einem Coextrusionsadapter sind Extruder zur Erzeugung der Kemschicht und Deckschicht(en) angeschlossen. Der Adapter ist so konstruiert, dass die die Deckschicht(en) formende Schmelze als dünne Schicht haftend auf die Schmelze der Kernschicht aufgebracht werden. Der so erzeugte mehrschichtige Schmelzestrang wird dann in der anschließend angeschlossenen Düse in die gewünschte Form (Stegplatte) gebracht. Anschließend wird in bekannter Weise mittels Vakuumkalibrierung (Stegplatte) die Schmelze unter kontrollierten Bedingungen abgekühlt und anschließend abgelängt. Gegebenenfalls kann nach der Kalibrierung ein Temperofen zur Eliminierung von Spannungen angebracht werden. Anstelle des vor der Düse angebrachten Adapters kann auch die Düse selbst so ausgelegt sein, dass dort die Zusammenführung der Schmelzen erfolgt.

Im erfindungsgemäßen Verfahren wird dabei das geschilderte Verfahren unter Verwendung einer wie oben beschrieben abgewandelten Düse, also mit Bohrung zur direkten Materialzuführung in die Stegform, durchgeführt. Dementsprechend ebenfalls Gegenstand der vorliegenden Anmeldung ist die Verwendung einer erfindungsgemäßen Düse zur Herstellung einer zwickelfreien, beschichteten Stegplatte.

Die Erfindung wird durch die folgenden Beispiele weiter erläutert, ohne auf diese beschränkt zu sein. Die erfindungsgemäßen Beispiele geben lediglich bevorzugte Ausführungsformen der vorliegenden Erfindung wider.

Die verwendeten Maschinen und Apparate zur Herstellung von mehrschichtigen Massivplatten werden im Folgenden beschrieben. Sie umfassen:
den-Hauptextruder mit einer Schnecke der Länge 25 bis 36 D und einen Durchmesser von 70 mm bis 200 mm mit Entgasung und ohne Entgasung
- einen oder mehrere Coextruder zum Aufbringen der Deckschichten mit einer Schnecke der Länge 25 bis 36 D, wobei D den Durchmesser des Extruders bezeichnet, und einem DürchmesserD von 25 mm bis 70 mm, mit und ohne Entgasung
- einen Co-Ex Adapter
- eine spezielle Stegplattendüse
- einen Kalibrator
- eine Abzugseinrichtung
- eine Rollenbahn
- eine Ablängvorrichtung (Säge)
- einen Ablagetisch.

Das Polycarbonat-Granulat des Basismaterials wurde dem Fülltrichter des Hauptextruders zugeführt, das Coextrusionsmaterial dem des Coextruders. Im jeweiligen Plastifiziersystem Zylinder/Schnecke erfolgte das Aufschmelzen und Fördern des jeweiligen Materials. Beide Materialschmelzen wurden in dem Coex-Adapter und der Stegplattendüse zusammengeführt und bildeten nach Verlassen der Düse und Abkühlen im Kalibrator einen Verbund. Die weiteren Einrichtungen dienten dem Transport, Ablängen und Ablegen der extrudierten Platten.

Die erhaltenen Platten wurden anschließend visuell begutachtet.

Es wurden Stegplatten der Dimensionen:

Stegdoppelplatte 10 mm dick, 11 mm Stegabstand, 2100 mm breit, 1,7 kg/m² SN2 10/11-2100 1,7kg/m² Stegdoppelplatte 10 mm dick, 11 mm Stegabstand, 2100 mm breit, 2,0kg/m² SS2 10/11-2100 2,0kg/m² Stegdoppelplatte 8 mm dick, 11 mm Stegabstand, 2100 mm breit, 1,5 kg/m² SN2 8/11-2100 1,5kg/m² Stegdoppelplatte 8 mm dick, 11 mm Stegabstand, 2100 mm breit, 1,7kg/m² SS2 8/11-2100 1,7kg/m²
aus Polycarbonat gefertigt, diese enthielten augenscheinlich keine Zwickel mehr und wiesen dementsprechend keinen Triangeleffekt mehr auf.

Die folgenden Polycarbonate wurden in diesen Versuchen als Coextrusion eingesetzt:
- Makrolon^{®} 1243, Ein verzweigtes Bisphenol A Polycarbonat mit 0,3 Mol % Isatinbiskresol als Verzweiger und einem M̅_{w} von 29 234 sowie einer relativen Lösungsviskisität von 0,5g/100 ml,
- Makrolon^{®} 3103, ein lineares Bisphenol A Polycarbonat mit M̅_{w} von 31 887 sowie einer relativen Lösungsviskosität von 0,5g/100 ml. als Basismaterialien sowie

DP1-1816, ebenfalls ein lineares Bisphenol A Polycarbonat mit M_{w} von 33 560 und UV-Schutz-additiven.

## Patentansprüche

1. Verfahren zur Herstellung einer mehrschichtigen Stegplatte, welche eine Basisschicht und mindestens eine Coextrusionsschicht umfasst, durch Coextrusion, **dadurch gekennzeichnet, dass** von dem Materialfluss, der die Basisschicht ausbildet, ein Teilfluss abgezweigt wird, der direkt in die Stegform (14) geführt wird und die Stege ausbildet.

2. Verfahren gemäß Anspruch 1, **dadurch gekennzeichnet, dass** das Abzweigen des Teilflusses durch eine Stegplattendüse erfolgt, welche mindestens eine Bohrung (13) aufweist, die zu einer direkten Zuführung eines Teils des Materials, das die Basisschicht ausbildet, in die Stegform führt.

3. Verfahren gemäß Anspruch 2, **dadurch gekennzeichnet, dass** der Teilfluss aus dem hinteren Bereich der Stegplattendüse abgezweigt wird.

4. Verfahren gemäß einem der vorstehenden Ansprüche, **dadurch gekennzeichnet, dass** die mehrschichtige Stegplatte eine Basisschicht, eine erste Coextrusionsschicht auf der Oberseite der Basisschicht und eine zweite Coextrusionsschicht auf der Unterseite der Basisschicht umfasst.

5. Verfahren gemäß einem der vorstehenden Ansprüche, **dadurch gekennzeichnet, dass** die Basisschicht und die Coextrusionsschicht oder Coextrusionsschichten jeweils einen transparenten Thermoplasten enthalten.

6. Verfahren gemäß Anspruch 5, **dadurch gekennzeichnet, dass** die Basisschicht und die Coextrusionsschicht oder Coextrusionsschichten jeweils den gleichen transparenten Thermoplasten enthalten.

7. Verfahren gemäß Anspruch 6, **dadurch gekennzeichnet, dass** die Basisschicht und die Coextrusionsschicht oder Coextrusionsschichten jeweils Polycarbonat enthalten.

8. Verfahren gemäß einem der vorstehenden Ansprüche, **dadurch gekennzeichnet, dass** mindestens eine Coextrusionsschicht mindestens einen UV-Absorber enthält.

## Claims

1. Process for the production, by coextrusion, of a multi-layer multi-wall sheet comprising a base layer and at least one coextruded layer, **characterized in that** part of the material flow forming the base layer is diverted and fed directly into the multi-wall mould (14) to form the multi-walls.

2. Process according to Claim 1, **characterized in that** the partial flow is diverted through a multi-wall sheet die having at least one channel (13) that leads to a direct feed of part of the material, forming the base layer, into the multi-wall mould.

3. Process according to Claim 2, **characterized in that** the partial flow is diverted from a region at the back of the multi-wall sheet die.

4. Process according to one of the preceding claims, **characterized in that** the multi-layer multi-wall sheet comprises a base layer, a first coextruded layer on the top side of the base layer and a second coextruded layer on the bottom side of the base layer.

5. Process according to one of the preceding claims, **characterized in that** the base layer and the coextruded layer(s) each contain a transparent thermoplastic.

6. Process according to Claim 5, **characterized in that** the base layer and the coextruded layer(s) each contain the same transparent thermoplastic.

7. Process according to Claim 6, **characterized in that** the base layer and the coextruded layer(s) each contain polycarbonate.

8. Process according to one of the preceding claims, **characterized in that** at least one coextruded layer contains at least one UV absorber.

## Revendications

1. Procédé de fabrication par coextrusion d'une plaque nervurée à plusieurs couches, qui comporte une couche de base et au moins une couche de coextrusion, **caractérisé en ce que** qu'un flux partiel du flux de matière formant la couche de base est dérivé, conduit directement dans le moule de la nervure (14) et forme les nervures.

2. Procédé suivant la revendication 1, **caractérisé en ce que** la dérivation du flux partiel se fait à l'aide d'une buse à plaque nervurée, laquelle comporte au moins un orifice (13), qui conduit à une alimentation directe dans le moule de la nervure d'une partie de la matière qui constitue la couche de base.

3. Procédé suivant la revendication 2, **caractérisé en ce que** le flux partiel est dérivé de la partie arrière de la buse à plaque nervurée.

4. Procédé suivant l'une des revendications précédentes, **caractérisé en ce que** la plaque nervurée à plusieurs couches comprend une couche de base, une première couche de coextrusion à la face supérieure de la couche de base et une deuxième couche de coextrusion à la face inférieure de la couche de base.

5. procédé suivant l'une des revendications précédentes, **caractérisé en ce que** la couche de base et la couche de coextrusion ou les couches de coextrusion contiennent chacune un matériau thermoplastique transparent.

6. Procédé suivant la revendication 5, **caractérisé en ce que** la couche de base et la couche de coextrusion ou les couches de coextrusion contiennent chacune le même matériau thermoplastique transparent.

7. Procédé suivant la revendication 6, **caractérisé en ce que** la couche de base et la couche de coextrusion ou les couches de coextrusion contiennent chacune du polycarbonate.

8. Procédé suivant l'une des revendications précédentes, **caractérisé en ce qu'**au moins une couche de coextrusion contient au moins un absorbant UV.
